(19) Europäisches Patentamt / European Patent Office / Office européen des brevets

(11) **EP 4 354 751 A1**

(12) # EUROPEAN PATENT APPLICATION

(43) Date of publication:
**17.04.2024 Bulletin 2024/16**

(21) Application number: **22306546.7**

(22) Date of filing: **12.10.2022**

(51) International Patent Classification (IPC):
$H04B\ 7/0413$ (2017.01)    $H01Q\ 3/46$ (2006.01)
$H01Q\ 15/14$ (2006.01)    $H04B\ 7/06$ (2006.01)
$H04B\ 7/026$ (2017.01)

(52) Cooperative Patent Classification (CPC):
**H04B 7/0413; H01Q 1/422; H01Q 15/148;
H04B 7/026; H04B 7/04013; H04B 7/0617**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fondation B-COM
35510 Cesson-Sévigné (FR)**

(72) Inventor: **HASKOU, Abdullah
35250 Saint Aubin d'Aubigné (FR)**

(74) Representative: **Cabinet Beau de Loménie
158, rue de l'Université
75340 Paris Cedex 07 (FR)**

(54) **METHOD AND DEVICE FOR CONTROLING A COMMUNICATION DEVICE**

(57) The invention concerns a method for controlling a communication device configured to reflect a signal between an emitter and a receiver, the communication device comprising reflecting elements positioned on a surface of the communication device, the method comprising, at a device:
• obtaining data defining an amount of energy to reflect associated to at least one reflecting element, based on the element's location on the surface of the communication device.

**FIG.1**

**Description**

Field of the disclosure

The present invention generally relates to the field of telecommunications, and especially to wireless telecommunications implemented by radio networks such as mobile telecommunication networks (ex. 3G, 4G, 5G, etc.), Wi-Fi (Wireless Fidelity), etc. It relates more specifically to a method for controlling a communication device configured to reflect a signal between an emitter and a receiver. The invention also relates to a device, a communication device, and a system.

Description of the Related Art

The previous generations of radio networks were considering the wireless propagation channel as an uncontrollable factor. However, recently, Reconfigurable Intelligent Surfaces (RISs) have received significant attention for their potential to enhance the capacity and coverage of radio networks by smartly reconfiguring the wireless propagation channel.

A RIS may be defined as a relay that receives an incident signal from an emitter and then re-radiates it in a specific direction. It is commonly considered as a full-duplex relay.

A RIS comprises a large number of reflecting elements that can dynamically tune the phase of the incident signal to improve the performance of radio networks. In particular, the reflected signals can be combined constructively to improve the strength of the signal received by a receiver. By deploying RISs in a radio network and intelligently reconfiguring their reflections, the wireless propagation channels between the emitter and receiver can be dynamically reconfigured to achieve the desired distributions and gains. This enables the radio network, to some extent, to be controlled, resulting in an improvement in term of reliability, capacity and addressing the issue of wireless channel interference and fading.

A RIS is typically configured to reflect an incident signal by propagating a radiation pattern comprising a "main lobe" toward the receiver and "side-lobes". In a radio antenna's radiation pattern, the main lobe is typically defined as the lobe containing the higher power, e.g., the lobe exhibiting the greater field strength, and the other lobes are called "side-lobes".

However, side-lobes usually represent unwanted radiation in undesired directions, since side-lobe radiation wastes energy and may cause interference to other receivers. Another disadvantage is that side-lobes may reduce the quality of the signal received by the targeted receiver, and thus reduce coverage area and spectral efficiency. Another disadvantage is that confidential information may be picked up by unintended receivers. Finally, side-lobes may lead to side-lobe clutters, e.g., unwanted returns coming from a direction outside the main lobe, and thus lead to a degraded localization accuracy.

For that reasons, it may be desirable to minimize the side-lobe level (SLL). In the array antenna domain, current approaches consist of controlling excitation of elements by changing amplitudes and phases of the signals injected into each element. However, the reflecting elements of a RIS - sometimes qualified of "passive" reflecting elements - only act as relays of an incident signal, and the signal cannot be amplified.

There is thus room for improvement in the fields of wireless telecommunications using relays.

Summary of the disclosure

To this end, the present invention first provides a method for controlling a communication device configured to reflect a signal between an emitter and a receiver, the communication device comprising reflecting elements positioned on a surface of the communication device, the method comprising, at a device:

- obtaining data defining an amount of energy to reflect associated to at least one reflecting element, based on the element's location on the surface of the communication device.

This method offers the advantage of allowing control of a communication device by providing a compromise between the side-lobe level and the received signal level.

In some implementations, obtaining data defining an amount of energy comprises determining a reflection magnitude of the at least one reflecting element, and the determined reflection magnitude is different from the reflection magnitude of at least one other reflecting element of the communication device.

In some implementations, the method further comprises controlling the reflection magnitude of the at least one reflecting element, based on the obtained data.

In some implementations, the reflecting elements of the communication device are organized as a grid, and the reflection magnitude is determined by applying a window function associating an element's location in the grid to a value.

In some implementations, the signal is reflected by propagating a radiation pattern comprising a main lobe and first side-lobes, and the reflection magnitude is determined according to a ratio between data representing the main lobe amplitude and between data representing a first side-lobe amplitude.

In some implementations, the method further comprises selecting a window function to apply among a set of predefined window functions, based on the ratio.

This is particularly advantageous since the window function providing the best compromise can be selected and applied to control the reflection magnitude.

In some implementations, the at least one reflecting element comprises a controllable unit including a variable capacitance diode connected in series or in parallel with a resistor, and controlling the reflection magnitude comprises varying the resistance of the resistor.

In some implementations, the method further comprises

- controlling mounting of a unit on the communication device, the unit being designed to adapt the amount of reflected energy.

In some implementations, the unit is a radome with a variable thickness or a dielectric load partitioned into several areas made of several materials, or made of a same material but with different densities.

In some implementations, controlling the reflection magnitude comprises activating some of the reflecting elements of the communication device, so that the distance between the activated elements increases gradually from the surface center to the surface edges.

In some implementations, the method further comprises:

- obtaining data defining a reflection phase for the at least one element;
- controlling the reflection phase of the at least one element, and the reflection magnitude and the reflection phase are independently controlled.

In some implementations, the at least one reflecting element comprises a controllable unit comprising a variable capacitance diode connected in series or in parallel with a resistor, and controlling the reflection phase comprises varying the capacitance.

In some implementations, the emitter and/or the receiver are compatible with the Standard ETSI TS 123 501.

In some implementations, data transmission is compatible with the Standard ETSI TS 123 003.

According to a second aspect, the present invention concerns a device comprising at least one processor and a memory having stored thereon a program for implementing the method of the invention.

According to a third aspect, the present invention concerns a communication device configured to reflect a signal between an emitter and a receiver, the communication device comprising reflecting elements positioned on a surface of the communication device, so that the inter-element distance increases gradually from the surface center to the surface edges.

According to a fourth aspect, the present invention concerns a system comprising:

- a communication device configured to reflect a signal between an emitter and a receiver, the communication device comprising reflecting elements positioned on a surface of the communication device; and,
- a unit mounted on the communication device, and designed to adapt the amount of reflected energy.

In some implementations, the unit is a radome with a variable thickness or a dielectric load partitioned into several areas made of several materials, or of a same material but with different densities.

Embodiments of the present invention also extend to programs which, when run on a computer or processor, cause the computer or processor to carry out the methods described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

Brief description of the drawings

Figure 1 depicts, for illustrative purposes, transmission of signals between an emitter and two receivers of a wireless communication system in which the invention is applicable;

Figure 2 illustrates a particular implementation of a device according to the invention;

Figure 3 illustrates an example of the hardware architecture of the device of Figure 2;

Figure 4 is a flowchart of steps of a method for controlling a communication device according to the invention;

Figure 5A illustrates an example of reflecting element of a communication device, according to the invention;

Figure 5B illustrates the evolution of the reflection magnitude and reflection phase, when varying the capacitance of the reflecting element of Figure 5A while setting the resistance $R$ of the resistor to $R = 0\Omega$;

Figure 5C illustrates the evolution of the reflection magnitude and reflection phase, when varying the resistance of the reflecting element of Figure 5A while setting the capacitance $C$ at $C = 1pF$;

Figure 6A illustrates an example of reflecting element of a communication device, according to the invention;

Figure 6B illustrates the evolution of the amplitude and phase, when varying the capacitance of the reflecting element of Figure 6A;

Figure 6C illustrates the evolution of the amplitude and phase, when varying the resistance of the reflecting element of Figure 6A;

Figure 7 illustrates calculated RIS phases, for four different cases and using different window functions;

Figure 8 illustrates calculated RIS amplitudes, for the four different cases and using different window functions;

Figure 9 illustrates radiation/reflection patterns in the horizontal plane, for the four different cases and using different window functions;

Figure 10 illustrates radiation/reflection patterns in the vertical plane, for the four different cases and using different window functions;

Figure 11 illustrates an example of system comprising a radome mounted on a communication device, according to the invention;

Figure 12 illustrates an example of system comprising a dielectric load partitioned into several areas and mounted on a communication device, according to the invention; and,

Figure 13 illustrates an example of a particular topology of reflecting elements on a communication device, according to the invention.

Detailed description

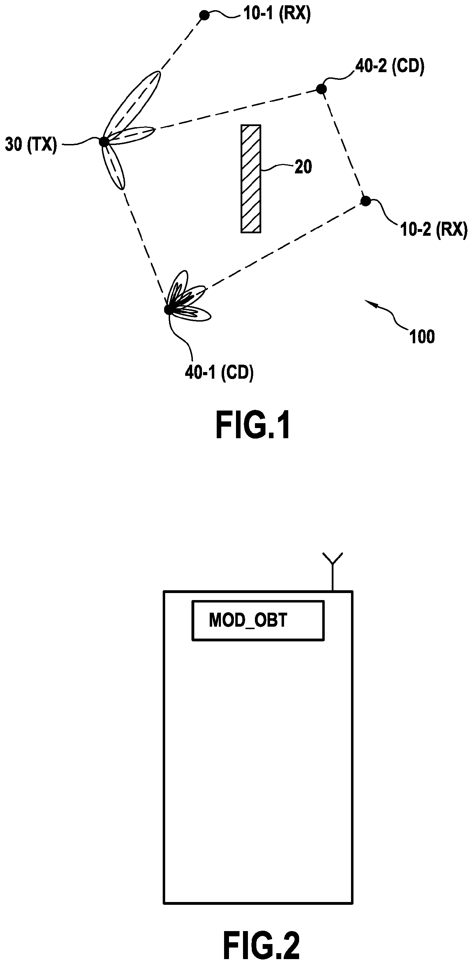

**Figure 1** depicts, for illustrative purposes, transmission of signals between an emitter 30 and two receivers 10-1 and 10-2 of a wireless communication system in which the invention is applicable.
As shown in Figure 1, the signal travels by a line-of-sight path between the emitter 30 and the receiver 10-1, i.e., using a direct path between the emitter 30 and said receiver 10-1.
On the contrary, the emitter 30 cannot communicate with the receiver 10-2 using a direct path, due to the presence of an obstacle 20. Communication devices 40-1 and 40-2 are set up in the environment of the emitter 30 and of the receivers 10-1, 10-2, and act as relays between these devices. More precisely, the communication devices 40-1, 40-2 are configured to re-radiate a signal and thus, for each communication device, there exists a propagation path between the emitter 30 and the receiver 10-2. More precisely, the signal is re-radiated by propagating a radiation pattern comprising a main lobe and first-side lobes. To do so, the communication device comprises a plurality of reflecting element all positioned on a surface of this communication device.
The relative locations of the emitter 30, of the receivers 10-1, 10-2 and of the relay devices 40-1, 40-2 may be identified using geographic coordinates, for example in a Cartesian coordinate system or in a spherical coordinate system.

Figure 1 also illustrates the radiation of the emitter 30. More precisely, Figure 1 schematically illustrates the generation of three beams by the emitter 30, i.e., using precoding.

In an implementation, the emitter is a user equipment, i.e., a device used by an end-user to communicate. It may be a smartphone or a laptop computer equipped with a mobile broadband adapter. And the receiver may be a base station, i.e., a piece of equipment that facilitates wireless communication between the user equipment and a network.

In an implementation, the invention applies to the 5G, e.g., the fifth-generation technology standard for broadband cellular networks. In an implementation, the emitter and/or the receiver are compatible with the Standard ETSI TS 123 501 (the current version being the version 17.4.0, published in May 2022 and also referenced as "3GPP TS 23.501 version 17.4.0 Release 17") and/or data transmission between the emitter 30 and the receivers 10-1 and 10-2 is compatible with the Standard ETSI TS 123 003 (the current version being the version 17.5.0, published in May 2022 and also referenced as "3GPP TS 23.003 version 17.5.0 Release 17"). In a variant, the invention applies beyond the fifth generation.

In an alternative, the emitter is a Wi-Fi Access Point, and the receiver is a Wi-Fi equipment.

In an implementation, the communication device is a Reconfigurable Intelligent Surfaces (RISs). This device may also be known under the names of Intelligent Reflecting Surfaces (IRSs), Large Intelligent Surfaces (LISs), or Software-Controlled Metasurfaces.

The person skilled in the art can consult the following articles to obtain further details on the Reconfigurable Intelligent Surfaces (RISs): "Antenna Theory Analysis and Design", C. A. Balanis, 3rd edition, Wiley-Interscience, 2005 ; "Reconfigurable Intelligent Surface-Aided Wireless Communications: Adaptive Beamforming and Experimental Validations", M. M. Amri & Al., IEEE Access, vol. 9, pp. 147442-147457, 2021 ; and, "Reconfigurable Intelligent Surfaces: A signal processing perspective with wireless applications," E. Björnson & Al., in IEEE Signal Processing Magazine, vol. 39, no. 2, pp. 135-158, March 2022.

In an implementation, this communication device is deployed on walls, ceiling, and furniture of an indoor environment, so as to enhance coverage. In a variant, it can be placed on highspeed vehicles, unmanned aerial vehicles (e.g., drones) or on buildings to achieve high spectral efficiency.

**Figure 2** illustrates a particular implementation of a device according to the invention. Said device is configured to control a communication device which is configured to reflect a signal between an emitter and a receiver. The device according to the invention may be the communication device itself, or a separated control device connected to the communication device.

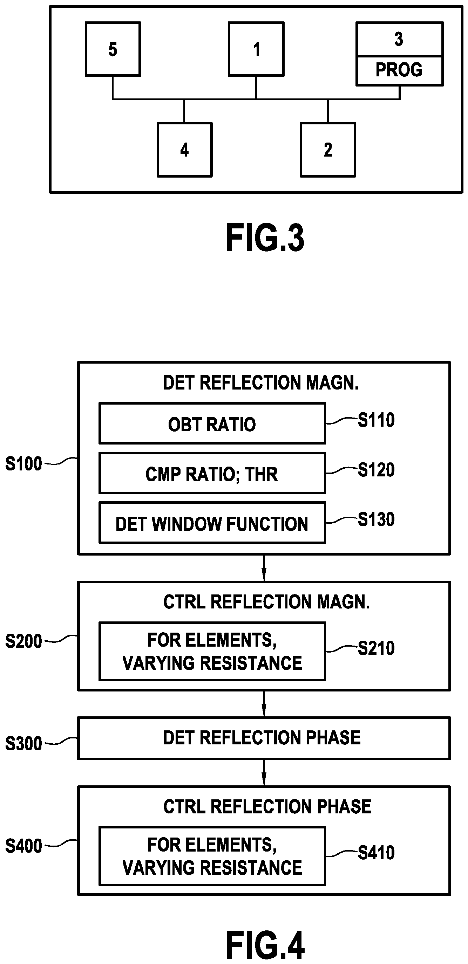

As illustrated by Figure 2, the device according to the invention comprises a module MOD_OBT configured for obtaining data defining an amount of energy to be reflected by the communication device, said module MOD_OBT being further detailed with reference to Figure 3.

The invention remains applicable whatever the nature of the radio network considered, in particular for a mobile telecommunication network implementing 3G (third generation of wireless mobile telecommunications technology), 4G (fourth generation of wireless mobile telecommunications technology), 5G (fifth generation of wireless mobile telecommunications technology), and/or B5G (acronym of Beyond 5G). The invention remains also applicable with a Wi-Fi (acronym of Wireless Fidelity) network, a WiMAX (acronym of Worldwide Interoperability for Microwave Access) network, a Satellite Internet Access network, etc.

In addition, no limitation is attached to the kind of data that may be shared over this radio network.

**Figure 3** illustrates an example of the hardware architecture of a device according to the invention.

To this end, the device has the hardware architecture of a computer. As shown in Figure 3, the communication device comprises a processor 1. Although illustrated as a single processor 1, two or more processors can be used according to particular needs, desires, or particular implementations of the communication device. Generally, the processor 1 executes instructions and manipulates data to perform the operations of the device and any algorithms, methods, functions, processes, flows, and procedures as described in the present disclosure.

The device also comprises communication means 5, in particular when the method of the invention is implemented by a separate control device. Although illustrated as a single communication means 5 in Figure 3, two or more communication means can be used according to particular needs, desires, or particular implementations of the device. The communication means are used by the device for communicating with another electronic device that is communicatively linked to the radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated communication device.

The device also comprises a random access memory 2, a read-only memory 3, and a nonvolatile memory 4. The read-only memory 3 of the device constitutes a recording medium conforming to the invention, which is readable by processor 1 and on which is recorded a computer program PROG conforming to the invention, containing instructions for carrying out the steps of the method for controlling a communication device according to the invention.

The program PROG defines functional modules of the device, which are based on or control the aforementioned elements 1 to 5 of the communication device, and which comprise in particular:

- a module MOD_OBT configured for obtaining data defining an amount of energy to reflect associated to at least one reflecting element, based on the element's location on the surface of the communication device.

**Figure 4** is a flowchart of steps of a method for controlling a communication device, according to a particular implementation of the invention.

As illustrated later, a communication device comprises a plurality of passive reflecting elements, each of which comprising a tunable element. By controlling the voltage ($v$) applied to the born of this tunable element, its state can be controlled, and a fortiori the communication device complex impedance $Z_{m,n}$ with $m,n$ the indices of elements of the communication device. Hence, the complex reflection coefficient $\Gamma_{m,n}$ of the elements can also be controlled, and may be expressed by $\Gamma_{m,n} = |\Gamma_{m,n}|e^{j\varphi m,n}$. $|\Gamma_{m,n}|$ corresponds to the reflection magnitude of the communication device, and $\varphi_{m,n}$ to the reflection phase.

As shown on Figure 4, the method for configuring a communication device comprises a first step S100 of determining the reflection magnitude of the communication device.

In a particular implementation, this first step S100 comprises a first sub-step S110 of computing a ratio, the value of which is used for determining the reflection magnitude to apply.

More precisely, the signal is reflected by the communication device by propagating a radiation pattern comprising a main lobe and first-side lobes, and this ratio $R$ corresponds to a ratio between data representing the main lobe amplitude

$$R = \frac{A_{ML}}{A_{FL}}$$

and between data representing a first-side lobe amplitude. In an example, with $A_{ML}$ the amplitude of the main lobe, and with $A_{FL}$ the amplitude of the first side-lobe.

This first step S100 then comprises a second sub-step S120 of comparing the ratio $R$ with a predetermined threshold. And, in response to the comparison step, a window function is determined (S130) that associates an element of this communication device to a value.

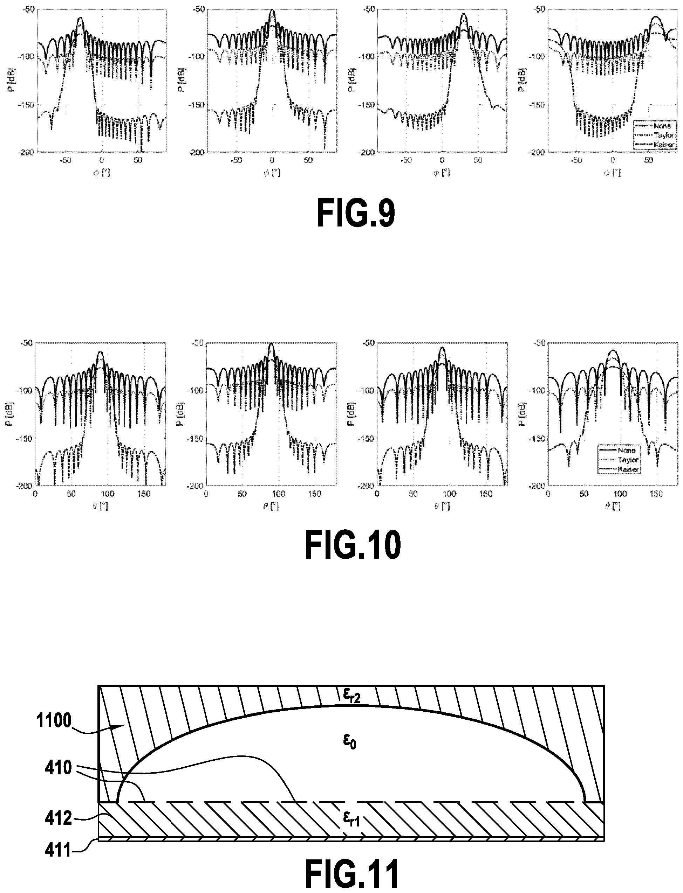

In an implementation, only one window function is available, and if the ratio is below the predetermined threshold, this available window function is applied. In an alternative, a plurality of window functions is available (e.g., a Kaiser window and a Taylor window), and one of the available window functions is selected and applied, as further detailed with respect to Figure 9.

More precisely, the elements of a communication device are organized as a grid. According to the invention, the notion of "grid" is not limited to a particular geometric shape, and this grid may be a rectangle, a square, a triangle, or may take any other shape. And the window function is applied by associating an element's location in the grid to a value.

Typically, a window function (also known as "apodization function" or "tapering function") is a mathematical function that is normally symmetric around the middle of an interval, usually near a maximum in the middle, and usually tapering away from the middle. In signal processing, several window functions are known, which are based on a constant (rectangular window), B-splines, other polynomials, sinusoids, cosine-sums, adjustable, hybrid, and other types. Among the well-known window functions, are the Parzen window, the Hann and Hamming windows, the Kaiser window, the Taylor window, and the Dolph-Chebyshev window.

The window functions considered for the invention may be well-known, or may be specifically designed. In an example, the reflection magnitude $|\Gamma_{m,n}|$ follows :

$$|\Gamma_{m,n}| = 1 - \left(\frac{d_{m,n}}{d_{max}}\right)^k$$

with $d_{m,n}$ the distance between the element ($m,n$) and the center of the surface, $d_{max}$ the distance between the center of the surface and the edge elements, and $k$ a real number.

However, it is worth noting that the window function determined in step S130 is different from a rectangular window (sometimes known as the "boxcar" or Dirichlet window) which gets a constant amplitude (usually equal to "1"). This feature results in a reflection magnitude of the communication device which is not the same for each of the elements of this communication device. This feature may be considered as counter-intuitive since the goal is typically to maximize the amplitude of the reflected signal, and as a consequence to obtain a reflection magnitude so that $|\Gamma_{m,n}|$ = 1. But as explained in further details below, varying the reflection magnitude depending on the location of the element in a surface of the communication device offers the advantage of providing a good compromise between the side-lobe level and the received signal level.

The method for configuring a communication device further comprises a step S200 of controlling reflection magnitude of the communication device.

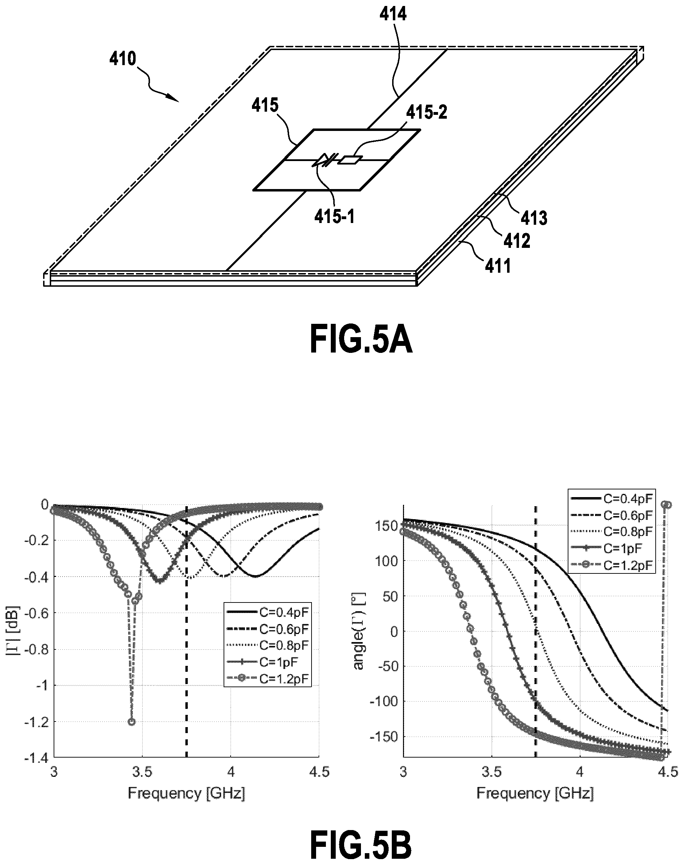

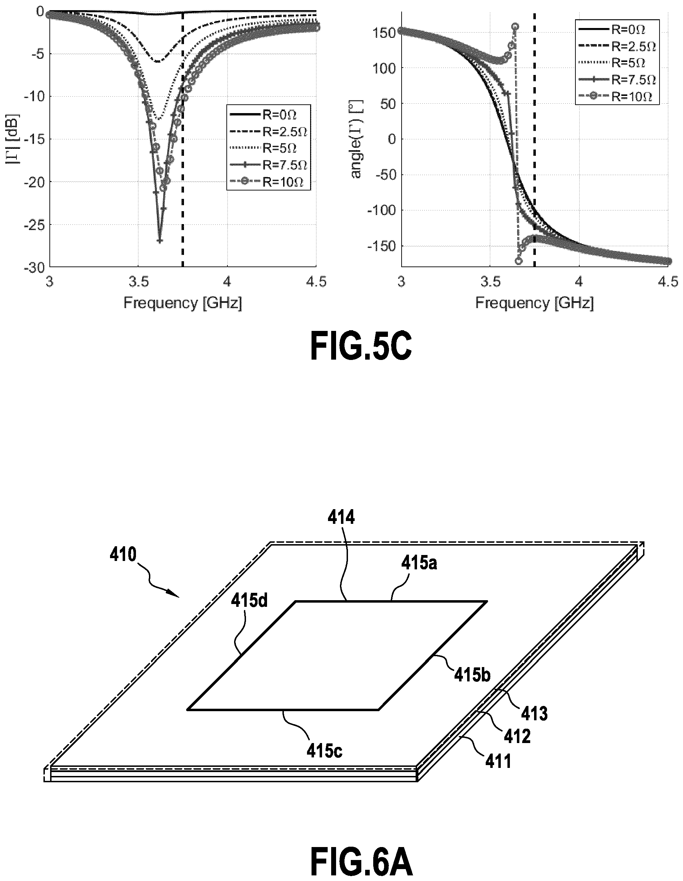

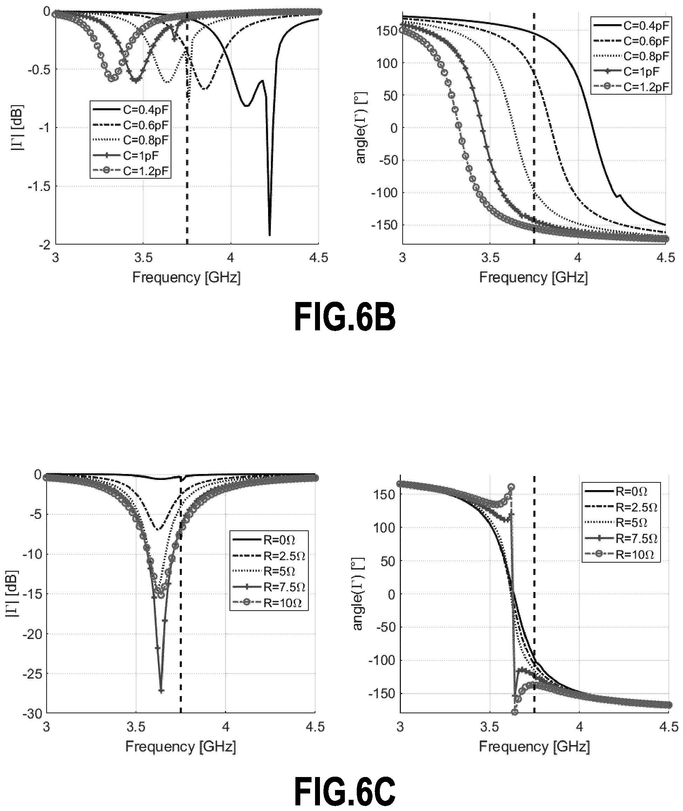

In an implementation, elements of the communication device comprise a controllable unit including a variable capacitance diode connected in series or in parallel with a resistor, and the control of the reflection magnitude is operated by varying the resistance of the resistor. This aspect is further detailed with respect to Figures 5B, 5C, 6B and 6C.

In an alternative, elements of the communication device can be activated or deactivated, and the control (S200) of the reflection magnitude is implemented by activating some of the reflecting elements of the communication device, so that the distance between the activated elements increases gradually from the surface center to the surface edge of the communication device.

As illustrated by Figure 4, the method for configuring a communication device further comprises a step S300 of determining a reflection phase of the communication device, and of controlling (S400) this reflection phase (more precisely to control the reflection phase $\varphi_{m,n}$ of elements of the communication device).

In an implementation, the reflection phase may be determined based on a propagation channel estimation, or based on a codebook-based method.

In an implementation, the elements of the communication device comprise a controllable unit including a variable capacitance diode connected in series or in parallel with a resistor, and the control of the reflection phase is operated by varying (S410) the capacitance of the variable capacitance diode. This aspect is further detailed with respect to Figures 5B, 5C, 6B and 6C.

In an implementation, the reflection magnitude and the reflection phase are independently controlled.

Formalization

Let us consider a system comprising a transmitter, a receiver, and a RIS composed of $M * N$ reflective elements. Then the complex reflection coefficient $\Gamma_{m,n}$ of the elements (m,n) may be expressed by $\Gamma_{m,n} = |\Gamma_{m,n}|e^{j\varphi m,n}$, where $|\Gamma_{m,n}|$ denotes the reflection magnitude of the communication device, $\varphi_{m,n}$ the reflection phase, $m \subset [1..M]$, and $n \subset [1.. N]$.

Let $h_{m,n}$ be the channel between the transmitter and each reflective element and $g_{m,n}$ the channel between each reflective element and the receiver, then the corresponding cascaded propagation channel $H_{m,n}$ may be formalized as follows:

$$H_{m,n} = h_{m,n}.\,g_{m,n}$$

And the received signal $s_{rx}$ is given by:

$$s_{rx} = \left(\sum_{m=1}^{M}\sum_{n=1}^{N} H_{m,n}\Gamma_{m,n}\right)s_{tx} + n$$

where $s_{tx}$ denotes the transmitted signal, and $n$ additive noise.

In the current approaches, $|\Gamma_{m,n}|= 1$ and $\varphi_{m,n} = \angle H_{m,n}^{*}$, where $\angle$ denotes an argument of a complex number, and * the complex conjugate of that complex number. Thus:

$$s_{rx} = \left(\sum_{m=1}^{M}\sum_{n=1}^{N} |H_{m,n}|\right)s_{tx} + n$$

On the contrary, according to the invention, $|\Gamma_{m,n}| = f(m,n)$ and $\varphi_{m,n} = \angle H_{m,n}^{*}$ with $f$ a function based on the elements' location on the surface of the communication device. Then,

$$s'_{rx} = \left(\sum_{m=1}^{M}\sum_{n=1}^{N} f(m,n)|H_{m,n}|\right)s_{tx} + n$$

Using passive reflective elements leads to $f(m,n) \leq 1$, hence the received signal level will drop compared to the baseline solution (i.e. $|s'_{rx}| \leq |s_{rx}|$). However, by selecting a specific function $f(m,n)$, an interesting compromises between the received signal level and the side-lobe level can be obtained.

One of the aims of the invention is to maximize as much as possible the quality, and a fortiori the spectral efficiency of the received signal.

The spectral efficiency ($\eta$) may be defined as the information rate that can be transmitted over a given bandwidth in a given communication system. The spectral efficiency ($\eta$) is typically given by:

$$\eta = log_2(1 + SINR) = log_2\left(1 + \frac{S}{I+N}\right)$$

where $SINR$ is the signal-to-interference-plus-noise ratio, S the received signal power, $I$ the interference power and $N$ the noise power.

To simplify the demonstration, let us consider the case where $I \gg N$, hence the spectral efficiency is given by:

$$\eta \approx log_2\left(1 + \frac{S}{I}\right)$$

As it can be seen for the previous formula of $\eta$, if the interference reduction is higher than the signal reduction, the SINR will still increase and so will the spectral efficiency.

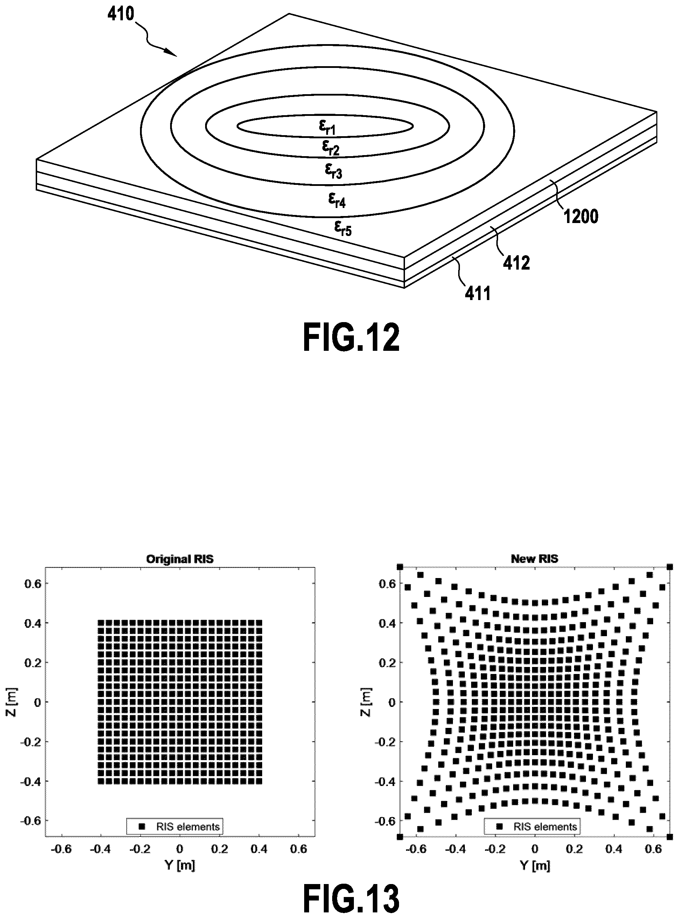

Up to now, the controlling of the reflection phase was described by varying the resistance of an element. In a variant, the reflection magnitude is controlled by controlling mounting of a unit designed to adapt the amount of reflected energy on the communication device. This aspect is further described with respect to Figures 11 and 12.

**Figure 5A** illustrates an example of a reflecting element 410 of a communication device, according to the invention.

As illustrated by Figure 5A, the reflecting element 410 is realized using a Printed Circuit Board (PCB), and comprises a ground plane 411 made of a continuous conductive metal plate, and a dielectric substrate 412, e.g., a non-conductive layer that holds a metal patch 413. This metal patch 413 is divided in two parts using a slot 414, which is in turn loaded by a controllable unit 415 comprising a variable capacitance diode 415-1 connected in series with a resistor 415-2.

In an example, the unit-element is designed for 3.75GHz frequency band, the metal patch 413 is a quarter-wavelength patch, the reflective element is printed on a Rogers RO4350 substrate with a dielectric effect $\varepsilon_r$ = 3.66, and a dielectric loss tangent $tan(\delta)$ = 0.004. The substrate dimensions are $25 \times 25 \times 1.524mm^3$, the patch dimensions are $24.5 \times 24.5mm^2$, and the slot width is 0.25mm.

**Figure 5B** illustrates the evolution of the reflection magnitude and reflection phase, when varying the capacitance of the reflecting element of Figure 5A while setting the resistance of the resistor to $R = 0\Omega$.

The figure on the left illustrates the evolution of the reflection magnitude, when setting the resistance of the resistor to $R = 0\Omega$, and setting the capacitance to 0.4 Picofarad (pF), 0.6 pF, 0.8 pF, 1pF and 1.2 pF. As illustrated by this figure, there is a very weak evolution of the reflection magnitude when varying the capacitance. As a matter of fact, for a frequency F=3.75 GHz, the difference between the reflection magnitudes is about 0.4 - 0.05 = 0.35$dB$.

The figure on the right illustrates the evolution of the reflection phase, when setting the resistance of the resistor to $R = 0\Omega$, and setting the capacitance to 0.4 pF, 0.6 pF, 0.8 pF, 1pF and 1.2 pF. As illustrated by this figure, there is a significant evolution of the phase when varying the capacitance. As a matter of fact, for a frequency F=3.75 GHz, the difference between the reflection phases is about 120°-(-150°) = 270°.

So the reflection phase of a reflective element such as the reflective element of Fig. 5A can be controlled by varying the capacitance of the reflection element. And the control of the reflection phase has a weak impact on the evolution of the reflection magnitude.

**Figure 5C** illustrates the evolution of the reflection magnitude and reflection phase, when varying the resistance of the reflecting element of Figure 5A while setting the capacitance at $C = 1pF$.

The figure on the left illustrates the evolution of the reflection magnitude, when setting the capacitance to $C = 1pF$, and setting the resistance to 0 $\Omega$, 2.5 $\Omega$, 5 $\Omega$, 7.5 $\Omega$, and 10 $\Omega$. As illustrated by this figure, there is a significant evolution of the reflection magnitude when varying the resistance. As a matter of fact, for a frequency F=3.75 GHz, the difference between the reflection magnitudes is about 11 dB.

The figure on the right illustrates the evolution of the reflection phase, when setting the capacitance to $C = 1pF$, and setting the resistance to 0 $\Omega$, 2.5 $\Omega$, 5 $\Omega$, 7.5 $\Omega$, and 10 $\Omega$. As illustrated by this figure, there is a weak evolution of the phase when varying the resistance. As a matter of fact, for a frequency F=3.75 GHz, the difference between the reflection phases is about 40°.

So the reflection magnitude of a reflective element such as the reflective element of Fig. 5A can be controlled by varying the resistance of the reflection element. And the control of the reflection magnitude has a weak impact on the evolution of the reflection phase.

So to put it in a nutshell, when using a reflecting element equipped with a variable capacitance diode and a resistance (such as the reflecting element of Figure 5A), the reflection magnitude and the reflection phase can be independently controlled.

**Figure 6A** illustrates another example of a reflecting element of a RIS, according to the invention.

As illustrated by Figure 6A, the reflecting element 410 is realized using a Printed Circuit Board (PCB), and comprises a ground plane 411 made of a continuous conductive metal plate, and a dielectric substrate 412, e.g., a non-conductive layer that holds a metal patch 413. This metal patch 413 is divided in two portions using a slot 414 having the shape of a square, which is in turn loaded by four controllable units 415a, 415b, 415c and 415d, each controllable unit being located on a side of the slot 414. Each controllable unit comprises a variable capacitance diode connected in series with a resistor.

In an example, the unit-element is designed for 3.75GHz frequency band, the metal patch 413 is a quarter-wavelength patch, the reflective element is printed on a Rogers RO4350 substrate with a dielectric effect $\varepsilon_r$ = 3.66, and a dielectric loss tangent $tan(\delta)$ = 0.004. The substrate dimensions are $25 \times 25 \times 1.524mm^3$, the patch dimensions are $24.5 \times 24.5mm^2$, the slot width is 0.25mm, and each side of the slot is at an equal distance of 7.75mm away from the center of the communication device.

**Figure 6B** illustrates the evolution of the reflection magnitude and reflection phase, when varying the capacitance of the reflecting element of Figure 6A.

The figure on the left illustrates the evolution of the reflection magnitude, when setting the resistance of the resistor to $R$ = 0Ω, and setting the capacitance to 0.4 Picofarad (pF), 0.6 pF, 0.8 pF, 1pF and 1.2 pF. As illustrated by this figure, there is a very weak evolution of the reflection magnitude when varying the capacitance. As a matter of fact, for a frequency F=3.75 GHz, the difference between the reflection magnitudes is about 0.8 dB.

The figure on the right illustrates the evolution of the reflection phase, when setting the resistance of the resistor to $R$ = 0Ω, and setting the capacitance to 0.4 pF, 0.6 pF, 0.8 pF, 1pF and 1.2 pF. As illustrated by this figure, there is a significant evolution of the phase when varying the capacitance. As a matter of fact, for a frequency F=3.75 GHz, the difference between the reflection phases is about 150°+150° = 300°.

So the reflection phase of a reflective element such as the reflective element of Fig. 6A can be controlled by varying the capacitance of the reflection element. And the control of the reflection phase has a weak impact on the evolution of the reflection magnitude.

**Figure 6C** illustrates the evolution of the reflection magnitude and reflection phase, when varying the resistance of the reflecting element of Figure 6A.

The figure on the left illustrates the evolution of the reflection magnitude, when setting the capacitance to $C$ = 0.8pF, and setting the resistance to 0 Ω, 2.5 Ω, 5 Ω, 7.5 Ω, and 10 Ω. As illustrated by this figure, there is a significant evolution of the reflection magnitude when varying the resistance. As a matter of fact, for a frequency F=3.75 GHz, the difference between the reflection magnitudes is about 8 dB.

The figure on the right illustrates the evolution of the reflection phase, when setting the capacitance to $C$ = 0.8pF, and setting the resistance to 0 Ω, 2.5 Ω, 5 Ω, 7.5 Ω, and 10 Ω. As illustrated by this figure, there is a weak evolution of the phase when varying the resistance. As a matter of fact, for a frequency F=3.75 GHz, the difference between the reflection phases is about 40°.

So the reflection magnitude of a reflective element such as the reflective element of Fig. 6A can be controlled by varying the resistance of the reflection element. And the control of the reflection magnitude has a weak impact on the evolution of the reflection phase.

So to put it in a nutshell, when using a reflecting element equipped with a variable capacitance diode and a resistance (such has the reflecting element of Figures 5A or 6A), the reflection magnitude and the reflection phase can be independently controlled.

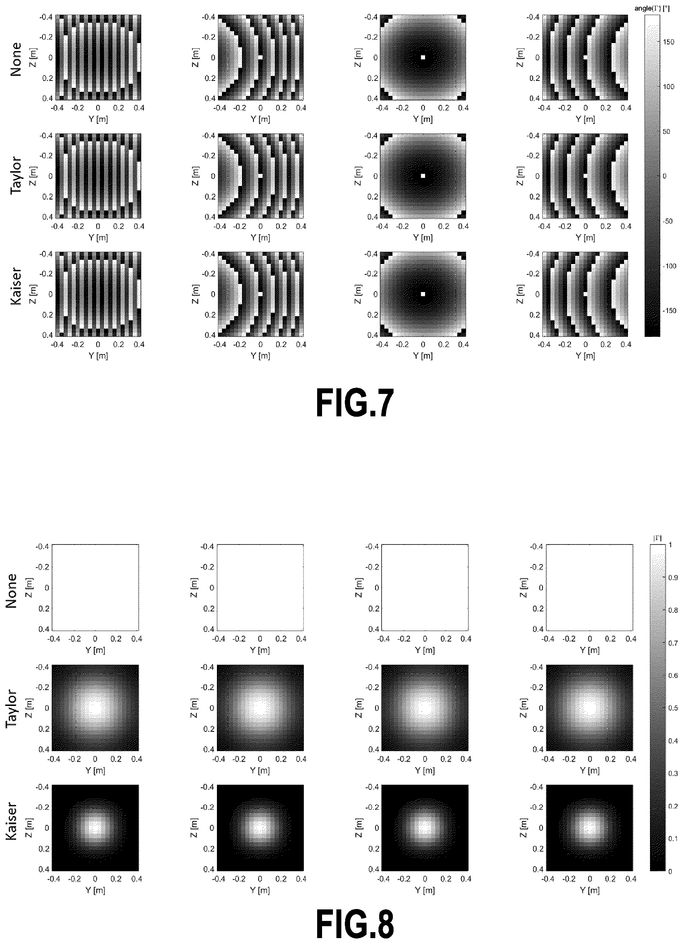

**Figure 7** illustrates calculated RIS reflection phases, for four different cases and using different window functions.

Let us consider a reference frame is defined by $(O,\vec{i},\vec{j},\vec{k})$, with O is a particular point in space and , $\vec{i},\vec{j},\vec{k}$ three unit normal vectors defining the metric properties of the space, a RIS in the $(O, \vec{j},\vec{k})$ plan, and an emitter and a receiver both in the $(O,\vec{i},\vec{j},\vec{k})$, plan.

This RIS comprises 21 × 21 elements and is designed for 3.75GHz 5G's band with an inter-element distance of half a wavelength. In a spherical coordinate system $(r, \theta, \varnothing)$, the position of a point is specified by three numbers: the radial distance (r), the polar angle (θ), and the azimuth angle (φ).

In this example, the RIS is centered at (0m,0°,0°) and the emitter is located at (2m,90°,-30°). Four cases are considered, e.g., where the receiver is respectively located at

    (a) (8m,90°,-30°),

(b) (3m,90°,0°),

(c) (5m,90°,30°) and

(d) (7m,90°,60°).

The different cases were simulated using MATLAB. The first line of Figure 7 illustrates the required reflection phases in a typical configuration applied to each of the four cases (a) to (d), where no window function is used or where a regular function having a predetermined constant value is used.

The second line of Figure 7 illustrates the required reflection phases when using a Taylor window function applied to each of the previously listed cases. And the third line of Figure 7 illustrates the required reflection phases when using a Kaiser window function applied to each of the four cases (a) to (d).

The three lines are very similar, because the invention applies a window function on the reflection magnitude, which does not impact the phase.

**Figure 8** illustrates calculated RIS amplitudes, for the four different cases and using different window functions.

The different cases were simulated using MATLAB. The first line of Figure 8 illustrates the required reflection magnitude in a typical configuration applied to each of the four cases (a) to (d), where no window function is used. With this typical configuration, the aim is to maximize the received signal (no matter the side-lobe level), and hence,

$$\left| \Gamma_{m,n} \right| = 1$$

This result is explicitly illustrated by this first line, where all the required reflection magnitude is the same for all the elements equals a constant (e.g., "1").

The second line of Figure 8 illustrates the required reflection magnitude when using a Taylor window function applied to each of the previously listed cases. And the third line of Figure 8 illustrates the required phases when using a Kaiser window function applied to each of the four cases (a) to (d).

So to put it in a nutshell, lines two and three of this Figure 8 illustrate that the required reflection amplitudes may be function of the elements' locations.

**Figure 9** illustrates radiation/reflection patterns in the horizontal plane, i.e., the $(0,\vec{i},\vec{j},)$ plane, for the four different cases previously listed, and using different window functions. These results were obtained by considering the received power level on a circle located at the RIS center, and passing through the receiver's location in the horizontal plane $((O,\vec{i},\vec{j},)$ plane).

As illustrated by case (a) of Figure 9, when no window function is applied, the ratio between the main lobe amplitude and the first side-lobe amplitude is around $R_{NO} \approx 21.4$ (*i.e.*13.3*dB*). When the Taylor window function is applied, the ratio between the main lobe amplitude and the first side-lobe amplitude is around $R_{TAYLOR} \approx 1071.5$ (*i.e.*30.3*dB*). When the Taylor window function is applied, the ratio between the main lobe amplitude and the first side-lobe amplitude is around $R_{KAISER} \approx 24547000$ (*i.e.*73.9*dB*).

So $R_{NO} < R_{TAYLOR} < R_{KAISER}$, and *a fortiori*, if no (or very few) interference are detected, there is no need to apply a window function. On the contrary, if a high level of interference is detected, the Kaiser window function should be preferred. And, the Taylor window function should be considered as an intermediate case between the two previous ones.

As a drawback, this figure 9 also illustrates the following relationship :

$$HPBW_{Kaiser} > HPBW_{Taylor} > HPBW_{No}$$

with $HPBW_{Kaiser}$ the Half Power Beamwidth when using a Kaiser window function in the $(O,\vec{i},\vec{j},)$ plane, $HPBW_{Taylor}$ the Half Power Beamwidth when using a Taylor window function in the $(O,\vec{i},\vec{j},)$ plane, and $HPBW_{No}$ the Half Power Beamwidth when using no window function in the $(O,\vec{i},\vec{j},)$ plane.

For the record, the Half Power Beamwidth is defined as the angle at which the power reduces by 3dB from its maximum value, on both sides of the maximum value, in the $(O,\vec{i},\vec{j},)$ plane.

Going back to Figure 5, in a particular implementation of step S120, a plurality of window functions is available (e.g., a Kaiser window and a Taylor window), and one of the available window functions is selected and applied. The selection is then based as a result of a comparison between the ratio and a plurality of predetermined thresholds, each predetermined threshold being associated to a given window function.

**Figure 10** illustrates radiation/reflection patterns in the vertical plane - the $(O,\vec{j},\vec{k})$ plane - , for the four different cases and using different window functions.

The same reasoning as the one developed for Figure 9 applies to this figure, and is not further detailed for conciseness reasons.

The results previously presented are summarized in the table below.

| Windowing function | HPBW in the $(O,\vec{i},\vec{j},)$ plane [in degrees] | HPBW in the $(O,\vec{j},\vec{k},)$ plane [in degrees] | Side-lobe level in the $(O,\vec{i},\vec{j},)$ plane [dB] | Side-lobe level in the $(O,\vec{j},\vec{k},)$ plane [dB] | Received power [dB] |
|---|---|---|---|---|---|
| None | 6.4 | 6.4 | -13.2 | -13.3 | -55.1 |
| Taylor | 8.2 | 8.2 | -29.1 | -30.3 | -62.7 |
| Kaiser | 13.6 | 13.4 | -75.7 | -73.9 | -72.1 |

Figures 11, 12 and 13 illustrate variants of the invention where the reflection magnitudes are predetermined, but the amount of energy reflected by the communication device is still based on the elements' location on the surface of the communication device.

**Figure 11** illustrates an example of system comprising a radome mounted on a communication device, according to the invention.

As illustrated by Figure 11, the communication device 40 comprises a ground plane 411, a dielectric substrate 412 having a permittivity $\varepsilon_{r1}$, several passive reflecting elements 410 and a radome 1100 mounted on the communication device 40, and having a permittivity $\varepsilon_{r2}$. $\varepsilon_0$ corresponds to the vacuum permittivity. The radome is designed so as to be thinner in the center compared to the edges. In this way, the radome introduces higher reflection losses in the edges rather than in the center.

**Figure 12** illustrates an example of system comprising a dielectric loading mounted on a communication device, according to the invention.

As illustrated by Figure 12, the communication device 40 comprises a ground plane 411, a dielectric substrate 412, several passive reflecting elements 410 and a dielectric loading 1200 mounted on the communication device 40. The dielectric load partitioned into several areas made of several materials or the same material with different densities or permittivity values $\varepsilon_{r1..5}$.

**Figure 13** illustrates an example of a particular topology of reflecting elements on a communication device, according to the invention.

More precisely, Figure 13A correspond to a typical topology, and Figure 13B, to a topology according to the invention. As illustrated by Figure 13B, the communication device is designed so that the inter-element distance increases gradually from the surface center to the surface edges.

In this way, the amount of energy reflected by the communication device will be higher in center of the surface than in its edges.

As an example, let us consider a communication system having a surface centered at the coordinate system origin O, with (m,n) the coordinates of a reflecting element, with $m \subset \left[-\frac{M}{2};\frac{M}{2}\right]$ and $n \subset \left[-\frac{N}{2};\frac{N}{2}\right]$, with M the length of the surface, and N the width of this surface.

Hence, the inter-element distance may be defined as follows :

$$d_{inc}(m,n) = d_m \left(2\sqrt{\frac{m^2+n^2}{M^2+N^2}}\right)^p$$

where $d_m$ denotes the desired inter-element distance increase of the furthest element in the matrix, and $p$ how fast the distance varies.

Hence, the new y- and z-Coordinates of each reflecting element are given by:

$$y'(m,n) = y(m,n)\left(1+\frac{1}{\sqrt{2}}d_{inc}(m,n)\right)$$

$$z'(m,n) = z(m,n)\left(1 + \frac{1}{\sqrt{2}}d_{inc}(m,n)\right)$$

Figure 13B illustrates a communication device designed with this inter-element distance $d_{inc}(m,n)$, for 3.75GHz frequency band, with an inter-element distance of $\lambda/2$, $d_m = \lambda/2$ and $p = 3$.

## Claims

1. A method for controlling a communication device (40-1, 40-2, 40-3) configured to reflect a signal between an emitter (30) and a receiver (10-1, 10-2), the communication device comprising reflecting elements (410) positioned on a surface of the communication device, the method comprising, at a device:

   - obtaining data defining an amount of energy to reflect associated to at least one reflecting element, based on the element's location on the surface of the communication device.

2. The method of Claim 1, wherein obtaining data defining an amount of energy comprises determining (S100) a reflection magnitude of the at least one reflecting element, wherein the determined reflection magnitude is different from the reflection magnitude of at least one other reflecting element of the communication device.

3. The method of Claim 2, further comprising controlling (S200) the reflection magnitude of the at least one reflecting element, based on the obtained data.

4. The method of Claim 2 or 3, wherein the reflecting elements of the communication device are organized as a grid, wherein the reflection magnitude is determined by applying (S130) a window function associating an element's location in the grid to a value.

5. The method of one of Claims 2 to 4, wherein the signal is reflected by propagating a radiation pattern comprising a main lobe and first side-lobes, wherein the reflection magnitude is determined according to a ratio between data representing the main lobe amplitude and between data representing a first side-lobe amplitude.

6. The method of Claim 5 in combination with Claim 4, further comprising selecting (S130) a window function to apply among a set of predefined window functions, based on the ratio.

7. The method of Claim 3, wherein the at least one reflecting element comprises a controllable unit (415) including a variable capacitance diode (415-1) connected in series or in parallel with a resistor (415-2), wherein controlling the reflection magnitude comprises varying (S210) the resistance of the resistor.

8. The method of Claim 1, further comprising:

   - controlling mounting of a unit (1100, 1200) on the communication device, the unit being designed to adapt the amount of reflected energy.

9. The method of Claim 8, wherein the unit is a radome (1100) with a variable thickness or a dielectric load (1200) partitioned into several areas made of several materials, or made of a same material but with different densities.

10. The method of Claim 3, wherein controlling the reflection magnitude comprises activating some of the reflecting elements of the communication device, so that the distance between the activated elements increases gradually from the surface center to the surface edges.

11. The method of one of Claims 1 to 10 in combination with claim 3, further comprising:

    - obtaining (S300) data defining a reflection phase for the at least one element;
    - controlling (S400) the reflection phase of the at least one element, wherein the reflection magnitude and the reflection phase are independently controlled.

**12.** The method of Claim 11, wherein the at least one reflecting element comprises a controllable unit (415) comprising a variable capacitance diode (415-1) connected in series or in parallel with a resistor (415-2), wherein controlling the reflection phase comprises varying (S410) the capacitance.

**13.** The method of one of Claims 1 to 12, wherein the emitter and/or the receiver are compatible with the Standard ETSI TS 123 501.

**14.** The method of one of Claims 1 to 13, wherein data transmission is compatible with the Standard ETSI TS 123 003.

**15.** A computer program (PROG) which on execution by a device causes the device to execute a method for controlling a communication device configured to reflect a signal between an emitter and a receiver, according to Claims 1 to 14.

**16.** A non-transitory computer-readable medium storing a program (PROG) which, when executed by a microprocessor or computer system, causes the microprocessor or computer system to perform a method for controlling a communication device configured to reflect a signal between an emitter and a receiver, according to Claims 1 to 14.

**17.** A device comprising at least one processor and a memory having stored thereon a program (PROG) for implementing the method according to any of claims 1 to 14.

**18.** A communication device configured to reflect a signal between an emitter and a receiver, the communication device comprising reflecting elements positioned on a surface of the communication device, so that the inter-element distance increases gradually from the surface center to the surface edges.

**19.** A system comprising:

- a communication device (40-1, 40-2, 40-3) configured to reflect a signal between an emitter and a receiver, the communication device comprising reflecting elements positioned on a surface of the communication device; and,
- a unit (1100, 1200) mounted on the communication device, and designed to adapt the amount of reflected energy.

**20.** The system of claim 19, wherein the unit is a radome with a variable thickness or a dielectric load partitioned into several areas made of several materials or of a same material but with different densities.

10-1 (RX)

40-2 (CD)

30 (TX)

20

10-2 (RX)

100

40-1 (CD)

# FIG.1

MOD_OBT

# FIG.2

## FIG.3

```
┌─────────────────────────────────────────┐
│                                          │
│   ┌───────┐    ┌───────┐    ┌─────────┐  │
│   │   5   │    │   1   │    │    3    │  │
│   │       │    │       │    ├─────────┤  │
│   └───┬───┘    └───┬───┘    │  PROG   │  │
│       │            │        └────┬────┘  │
│       │            │             │       │
│       └──────┬─────┴──────┬──────┘       │
│         ┌────┴──┐    ┌─────┴──┐           │
│         │   4   │    │   2    │           │
│         │       │    │        │           │
│         └───────┘    └────────┘           │
│                                          │
└─────────────────────────────────────────┘
```

## FIG.3

---

## FIG.4

```
┌───────────────────────────────────────────┐
│          DET REFLECTION MAGN.              │
│   ┌─────────────────────────────────┐      │
│   │           OBT RATIO             │──S110│
│   └─────────────────────────────────┘      │
S100│  ┌─────────────────────────────────┐   │
│   │        CMP RATIO; THR           │──S120│
│   └─────────────────────────────────┘      │
│   ┌─────────────────────────────────┐      │
│   │      DET WINDOW FUNCTION        │──S130│
│   └─────────────────────────────────┘      │
└───────────────────────────────────────────┘
                     │
                     ▼
┌───────────────────────────────────────────┐
│          CTRL REFLECTION MAGN.             │
│   ┌─────────────────────────────────┐      │
S200│  │      FOR ELEMENTS,            │──S210│
│   │    VARYING RESISTANCE           │      │
│   └─────────────────────────────────┘      │
└───────────────────────────────────────────┘
                     │
                     ▼
┌───────────────────────────────────────────┐
S300│         DET REFLECTION PHASE          │
└───────────────────────────────────────────┘
                     │
                     ▼
┌───────────────────────────────────────────┐
│          CTRL REFLECTION PHASE             │
│   ┌─────────────────────────────────┐      │
S400│  │      FOR ELEMENTS,            │──S410│
│   │    VARYING RESISTANCE           │      │
│   └─────────────────────────────────┘      │
└───────────────────────────────────────────┘
```

## FIG.4

**FIG.5A**

**FIG.5B**

FIG.5C

FIG.6A

# FIG.6B

# FIG.6C

FIG.7

FIG.8

FIG.9

FIG.10

FIG.11

**FIG.12**

**FIG.13**

Europäisches
Patentamt

European
Patent Office

Office européen
des brevets

# EUROPEAN SEARCH REPORT

**Application Number**

EP 22 30 6546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | BJORNSON EMIL ET AL: "Reconfigurable Intelligent Surfaces: A signal processing perspective with wireless applications", IEEE SIGNAL PROCESSING MAGAZINE, vol. 39, no. 2, 1 March 2022 (2022-03-01), pages 135-158, XP055958636, USA ISSN: 1053-5888, DOI: 10.1109/MSP.2021.3130549 | 1-4,7, 11-17,19 | INV. H04B7/0413 H01Q3/46 H01Q15/14 H04B7/06 H04B7/026 |
| Y | * page 135, left, column, to page 139, left-column;; figure 1 * | 5,6,8,9, 20 | |
| | ----- | | |
| X | LI QIANG ET AL: "Single-RF MIMO: From Spatial Modulation to Metasurface-Based Modulation", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 28, no. 4, 10 September 2021 (2021-09-10), pages 88-95, XP011877027, ISSN: 1536-1284, DOI: 10.1109/MWC.021.2000376 [retrieved on 2021-09-10] | 1-3,7, 11,12, 15-17,19 | |
| | | | **TECHNICAL FIELDS SEARCHED (IPC)** |
| | | | H04B H01Q |
| Y | * page 89, right-column, to page 91, right-column; figures 1, 3 * | 5,6,8,9, 20 | |
| | ----- | | |
| | -/-- | | |

The present search report has been drawn up for all claims

| Place of search | Date of completion of the search | Examiner |
|---|---|---|
| Munich | 3 March 2023 | Ganis, Alexander |

EPO FORM 1503 03.82 (P04C01)

**EUROPEAN SEARCH REPORT**

Application Number

EP 22 30 6546

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NGUYEN NHAN THANH ET AL: "Hybrid Relay-Reflecting Intelligent Surface-Assisted Wireless Communications", IEEE TRANSACTIONS ON VEHICULAR TECHNOLOGY, IEEE, USA, vol. 71, no. 6, 10 March 2022 (2022-03-10), pages 6228-6244, XP011912541, ISSN: 0018-9545, DOI: 10.1109/TVT.2022.3158686 [retrieved on 2022-06-24] | 1-3, 15-17,19 | |
| Y | * page 6230, right-column, to page 6231, left-column; page 6240, left-column; figure 7 * | 5,6,8,9, 20 | |
| X | CN 114 512 821 A (GUANGZHOU INSTITUTE OF RESEARCH OF XIAN ELECTRONIC SCIENCE UNIV) 17 May 2022 (2022-05-17) | 1-3,10, 11, 13-17,19 | |
| Y | * paragraphs [0002] - [0003], [0056] - [0059]; figure 4 * | 5,6,8,9, 20 | |
| Y | WO 2022/061469 A1 (CARLETON UNIV [CA]) 31 March 2022 (2022-03-31) * paragraph [0021]; figures 2A,2B * | 5,6 | TECHNICAL FIELDS SEARCHED (IPC) |
| Y | CN 114 927 871 A (UNIV SOUTHEAST) 19 August 2022 (2022-08-19) * paragraph [0081]; figure 6a * | 8,9,20 | |

The present search report has been drawn up for all claims

| Place of search | Date of completion of the search | Examiner |
|---|---|---|
| Munich | 3 March 2023 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

Application Number

EP 22 30 6546

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-17, 19, 20

☐ The present supplementary European search report has been drawn up for those parts of the European patent application which relate to the invention first mentioned in the claims (Rule 164 (1) EPC).

24

Europäisches
Patentamt

European
Patent Office

Office européen
des brevets

**LACK OF UNITY OF INVENTION**
**SHEET B**

Application Number

EP 22 30 6546

The Search Division considers that the present European patent application does not comply with the requirements of unity of invention and relates to several inventions or groups of inventions, namely:

     1. claims: 1-17, 19, 20

        Optimally control a gain of the system (1)
          ---

     2. claim: 18

        Implement an efficient reflective element distribution (2)
          ---

## ANNEX TO THE EUROPEAN SEARCH REPORT
## ON EUROPEAN PATENT APPLICATION NO.

EP 22 30 6546

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2023

| Patent document cited in search report | | Publication date | Patent family member(s) | | Publication date |
|---|---|---|---|---|---|
| CN 114512821 | A | 17-05-2022 | NONE | | |
| WO 2022061469 | A1 | 31-03-2022 | CA | 3196718 A1 | 31-03-2022 |
| | | | WO | 2022061469 A1 | 31-03-2022 |
| CN 114927871 | A | 19-08-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. A. BALANIS.** Antenna Theory Analysis and Design. Wiley-Interscience, 2005
- **M. M. AMRI ; AL.** Reconfigurable Intelligent Surface-Aided Wireless Communications: Adaptive Beamforming and Experimental Validations. *IEEE Access,* 2021, vol. 9, 147442-147457

- **E. BJÖRNSON ; AL.** Reconfigurable Intelligent Surfaces: A signal processing perspective with wireless applications. *IEEE Signal Processing Magazine,* March 2022, vol. 39 (2), 135-158